(19) Europäisches Patentamt
European Patent Office
Office européen des brevets

(11) Veröffentlichungsnummer: **0 464 351 A2**

(12) **EUROPÄISCHE PATENTANMELDUNG**

(21) Anmeldenummer: **91108234.5**

(22) Anmeldetag: **22.05.91**

(51) Int. Cl.5: **C08L 67/00**, C08L 69/00, C08G 63/60, C08G 63/06, C08G 63/20, C08L 77/12, C08G 69/44

(30) Priorität: **01.06.90 DE 4017685**

(43) Veröffentlichungstag der Anmeldung: **08.01.92 Patentblatt 92/02**

(84) Benannte Vertragsstaaten: **DE FR GB IT**

(71) Anmelder: **BAYER AG**

**W-5090 Leverkusen 1 Bayerwerk(DE)**

(72) Erfinder: **Pielartzik, Harald, Dr.**
**1835 Tilton Drive**
**Pittsburgh, PA 15241-2636(US)**
Erfinder: **Westeppe, Uwe, Dr.**
**Vogelskamp 72**
**W-4020 Mettmann(DE)**
Erfinder: **Wendt, Eckhard, Dr.**
**Buschstrasse 171**
**W-4150 Krefeld(DE)**
Erfinder: **Dhein, Rolf, Dr.**
**Deswatinesstrasse 30**
**W-4150 Krefeld(DE)**

(54) **Leichtfliessende Polycarbonat-, Polyestercarbonat und Polyesterformmassen.**

(57) Gegenstand der vorliegenden Erfindung sind leichtfließende Polycarbonat-, Polyestercarbonat und Polyesterformmassen mit einem Gehalt an flüssigkristallinen Ester- und/oder Esteramid-Oligomeren.

EP 0 464 351 A2

Die Erfindung betrifft neue leichtfließende Polycarbonat-, Polyestercarbonat- und Polyesterformmassen, die niedermolekulare flüssigkristalline Ester (amide) enthalten.

Aus der DE-OS 3 824 365 (Le A 25 898) is bekannt, daß definiert aufgebaute flüssigkristalline Verbindungen der Formel (I)

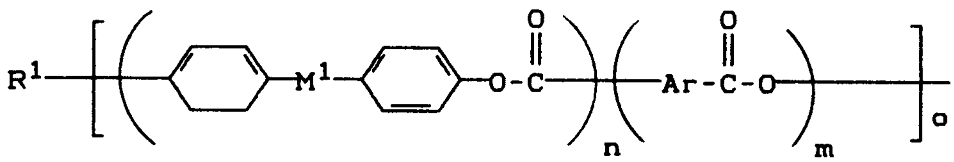

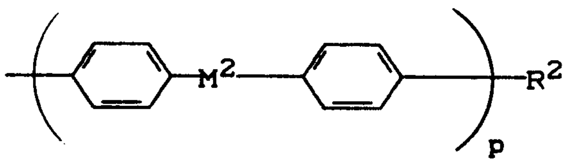

(I)

worin

-Ar ein aromatischer Ring ist der einkernig oder mehrkernig sein, wobei der mehrkernige Rest einbindig verknüpft oder annelliert sein kann,

das Fließverhalten dieser Spritzmassen deutlich verbessern und gleichzeitig Festigkeit und Modul erhöhen.

Die Herstellung derartig definierter aufgebauter flüssigkristalliner Verbindung erfolgt im Rahmen einer vielstufigen Synthese und ist sehr aufwendig, so daß größere Produktmengen dieser Verbindungen für eine technische Verwendung sehr aufwendig herzustellen sind.

Überraschend wurde nun gefunden, daß flüssigkristalliner Ester- und/oder Esteramid-Oligomerer des Strukturtyps der Formel (II) mit statistischer Verteilung der Struktureinheiten

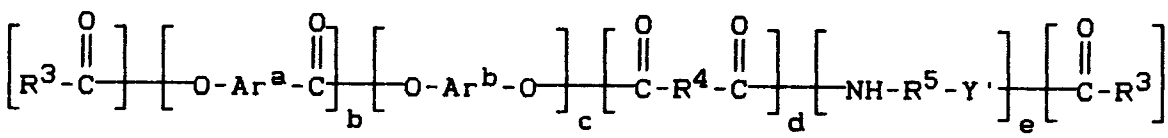

Formel (II)

worin

$R^3$ einen Alkylrest, vorzugsweise Methylrest, oder einen gegebenenfalls substituierten, vorzugsweise mono- oder disubstituierten Arylrest, vorzugsweise einen Phenylrest, darstellt,

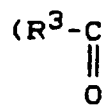

ist jeweils eine Endgruppe)

$Ar^a$ ein bivalenter, gegebenenfalls substituierter (Substituenten wie in $R^3$), ein- oder mehrkerniger aromatischer Rest mit 6-24 C-Atomen ist, wobei der mehrkernige Rest direkt verknüpft oder auch anelliert sein kann,

$Ar^b$ einen bivalenten, gegebenenfalls substituierten, ein- oder mehrkernigen aromatischen Rest mit 6-30 C-Atomen darstellt, wobei der mehrkernige Rest unterschiedlich verknüpft sein kann,

$R^4$ bzw. $R^5$ für einen Alkylrest mit 0-40 ($R^4$) bzw. 3-40 ($R^5$) C-Atomen stehen oder beide auch für einen cycloaliphatischen Rest mit 5-15 C-Atomen stehen können oder die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch annelliert verknüpft sein kann,

Y' für -O-,

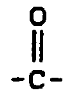

oder -NH- steht, und im Falle der Verknüpfung mit einer Endgruppe

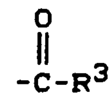

für die Reste -O- oder -NH- steht, und

b = Null bis 10, vorzugsweise bis 8, insbesondere bis 4,
c = 1 bis 9, vorzugsweise bis 7, insbesondere 1 bis 4,
d = Null bis 9, vorzugsweise bis 7, insbesondere bis 3,
e = Null bis 3, vorzugsweise bis 2, ist

und worin die Endgruppen durch Strukturelemente des Typs

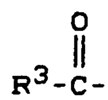

gebildet werden,
und wobei das mittlere Molekulargewicht $\overline{M}n$ der Verbindungen der Formel (II) nicht größer als 4000, bevorzugt nicht größer als 2500 ist, als Additive für thermoplastische, aromatische Polycarbonate, für thermoplastische, aromatische Polyestercarbonate und für thermoplastische, aromatische Polyeser geeignet, wobei sie sowohl eine Verbesserung der Steifigkeit und der Biegefestigkeit dieser Thermoplasten als auch eine Verbesserung der Verarbeitbarkeit (Verbesserung der Fließfähigkeit oder Reduktion der Verarbeitungstemperatur) dieser Thermoplasten bewirken.

Aufbau der Verbindungen der Formel (II):

Bevorzugte Reste $R^3$ der Formel (II) sind Alkylreste mit 1 bis 30, besonders bevorzugt 1 bis 22 Kohlenstoffatomen, wie $CH_3$, $C_2H_5$, $C_3H_7$, $C_4H_9$, $C_5H_{11}$, $C_6H_{13}$, $C_{15}H_{31}$, $C_{16}H_{33}$, $C_{17}H_{35}$, $C_{18}H_{37}$, $C_{19}H_{39}$ und $C_{22}H_{45}$, ganz besonders bevorzugt $CH_3$, oder aromatische Reste der Formeln (III), (IIIa) und (IV)

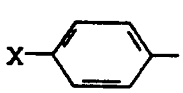 (III), 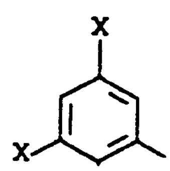 (IV), 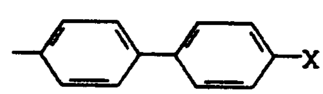 (IIIa),

worin

X Wasserstoff, Halogen, $NO_2$, $C_1$-$C_4$-Alkyl, $C_3$-$C_6$-Cycloalkyl, $C_6$-$C_{14}$-Aryl, O-$C_1$-$C_4$-Alkyl, O-$C_3$-$C_6$-Cycloalkyl, fluoriertes $C_1$-$C_4$-Alkyl, fluoriertes $C_3$-$C_6$-Cycloalkyl oder fluoriertes $C_6$-$C_{14}$-Aryl sein kann.

Insbesonders sind als $R^3$ bevorzugt aromatische Reste der Formeln (V) und (VI)

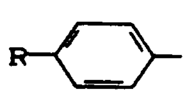 (V), 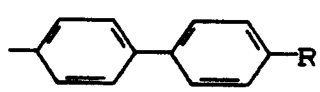 (VI),

worin

R für Wasserstoff, Halogen, wie Fluor, Chlor, $C_1$-$C_4$-Alkyl, $C_3$-$C_6$-Cycloalkyl, O-$C_1$-$C_4$-Alkyl, O-$C_3$-$C_6$-

Cycloalkyl, fluoriertes $C_1$-$C_4$-Alkyl oder fluoriertes $C_3$-$C_6$-Cycloalkyl steht.

Ganz besonders bevorzugt sind solche aromatischen Reste der Formeln (V) und (VI), in denen R = Wasserstoff bedeutet.

Bevorzugte Monocarbonsäuren, von denen sich der Rest

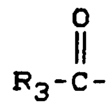

ableitet, sind u.a. Benzoesäure, 4-Methylbenzoesäure, 4-Methoxybenzoesäure und 4-Biphenylcarbonsäure. Besonders bevorzugt sind u.a. Benzoesäure, 4-Methylbenzoesäure und 4-Biphenylcarbonsäure.

Als bivalente aromatische Reste ($Ar^a$) in der Formel (II) kommen solche in Betracht, die den aromatischen Hydroxycarbonsäuren der Formeln

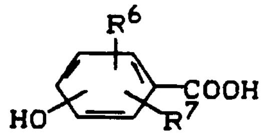

und

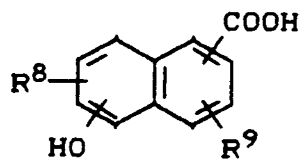

(VII) (VIII)

zugrundeliegen, worin

$R^6$ bis $R^9$ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten, und die Valenzen zwischen Kern und Hydroxylgruppe, sowie zwischen Kern und Carboxylgruppe einen Winkel von 45 bis 180° bilden.

Bevorzugte aromatische Hydroxycarbonsäuren sind 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure. Besonders bevorzugt sind 4-Hydroxybenzoesäure, 3-Hydroxybenzoesäure und 6-Hydroxy-2-naphthoesäure.

Die aromatischen Hydroxycarbonsäuren haben die OH-Gruppe vorzugsweise symmetrisch (1,4-Phenylen- oder 2,6-Naphthylen- oder 4,4'-Diphenyl-Positionen) zur Carboxylgruppe.

Als bivalente aromatische Reste ($Ar^b$) der Formel (II) kommen solche in Betracht, die den Diphenolen der Formel (IX)

HO-Z-OH (IX) zugrundeliegen,

worin

Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben m/p-Phenylen-, 2,6- oder 1,5-Naphthylen- und 4,4'-Biphenylen-Resten auch durch Sauerstoff, Schwefel, Carbonyl, Sulfonyl, oder Azomethin, $C_1$-$C_{18}$-,vorzugsweise $C_1$-$C_4$-Alkylen oder -Alkyliden, (alkylsubstituiertes) Cyclohexylen oder -hexyliden oder $-O(CH_2)_nO-$mit n = 2 bis 4 verbundene Phenylenreste.

Bevorzugte Diphenole sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Methylhydrochinon, Phenylhydrochinon, 2,2'-Dimethyl-4,4'-dihydroxydiphenyl, 3,3',5,5'-Tetramethyl-4,4'-dihydroxydiphenyl, 1,2-(2-Chlor-4-hydroxyphenoxy)-ethan, 4-Methoxy-2,6-dihydroxynaphthalin. Resorcin, 3,4'-Dihydroxydiphenyl, 1,6-Dihydroxynaphthalin.

1,7-Dihydroxynaphthalin, 2,7-Dihydroxynaphthalin, 4-Chlorresorcin, 4-Phenylresorcin, 4-Ethoxyresorcin,

2,5-Dichlor-1,6-dihydroxynaphthalin und 4-Methoxy-2,7-dihydroxynaphthalin.

Besonders bevorzugte Diphenole sind Hydrochinon und 4,4'-Dihydroxydiphenyl.

Als bivalente Reste ($R^4$) der Formel (II) kommen solche in Betracht, die den Dicarbonsäuren der Formel (X)

HOOC-$R^4$-COOH (X) zugrundeliegen,

worin

$R^4$ für $C_mH_{2m}$ mit m = 0-40, bevorzugt von 0-20 und von 30-38, oder auch für einen cycloaliphatischen Rest mit 5-15 C-Atomen steht, oder bevorzugt

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy, Phenyl-, Phenoxy-, Benzyl- oder Halogenreste (vorzugsweise Chlor und Brom) substituiert sein und umfassen neben 1,4-Phenylen-Resten, 1,5- oder 2,6-Naphthylen-Resten und 4,4'- oder 3,5'-Biphenylen-Resten auch durch Sauerstoff, Schwefel, Carbonyl, Sulfonyl, $C_1$-$C_4$-Alkylen oder -Alkyliden,

Cyclohexylen oder -hexyliden oder -$O(CH_2)_nO$- mit n = 1 bis 4 verbundene Phenylenreste, vorzugsweise in symmetrischer Substitution ("para-Stellung").

Bevorzugt sind folgende (cyclo-)aliphatische Dicarbonsäuren: Oxalsäure, Bernsteinsäure, Adipinsäure, Korksäure, Azelainsäure, Trimethyladipinsäure, Sebacinsäure, Dodecandisäure, Dimerfettsäuren und 1,4-Cyclohexandicarbonsäure.

Besonders bevorzugt werden Oxalsäure, Adipinsäure, Sebazinsäure und Dimerfettsäuren eingesetzt.

Bevorzugte aromatische Dicarbonsäuren sind solche, die folgenden bivalenten Resten zugrundeliegen: 1,4-Phenylen-, 1,4-Naphthylen- oder 4,4'-Biphenylen-, worin die beiden Bindungen sich koaxial in entgegengesetzte Richtungen erstrecken, oder 1,5-Naphthylen-Reste, 2,6-Naphthylen-Reste oder 3,5'-Biphenylen-Reste, worin die beiden in entgegengesetzte Richtungen zeigenden Bindungen parallel zueinander verschoben sind, sowie 1,3-Phenylen-Reste, 1,3-, 1,6-, 1,7- oder 2,7-Naphthylen-Reste oder 3,4'-Biphenylen-Reste, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren sind 1,4-Naphthalindicarbonsäure, 1,5-Naphthalindicarbonsäure, 2,6-Naphthalindicarbonsäure, Biphenyl-4,4'-dicarbonsäure, Bipenyl-3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 2,6- oder 2,7-Naphthalindicarbonsäure, Biphenyl-3,4'-dicarbonsäure, 4-Methylisophthalsäure, 5-Methylisophthalsäure, Diphenylether-4,4'-dichlor-3,3'-dicarbonsäure, Iso- und Terephthalsäure.

Besonders bevorzugt sind Iso- und Terephthalsäure.

Es können sowohl ausschließlich aliphatische oder aromatische Dicarbonsäuren als auch Mischungen von beiden eingesetzt werden.

Als bivalente Reste ($R^5$) der Formel (II) kommen solche in Betracht, die den Aminoverbindungen der Formel (XI)

$H_2N$-$R^5$-Y (XI) zugrundeliegen,

worin

$R^5$ für $C_mH_{2m}$ mit m = 3 bis 40, bevorzugt 4 bis 12, und einen cycloaliphatischen Rest mit 5 bis 15 C-Atomen (5-6 Ring-C-Atomen), und

Y für OH, COOH oder $NH_2$ stehen, oder worin $R^5$

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen-, Naphthylen- und Biphenylen-Resten auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$-mit n = 1 bis 4 verbundene Phenylenreste.

Anstelle der aliphatischen Aminocarbonsäuren können auch die entsprechenden Lactame, z.B. Caprolactam anstatt von $\epsilon$-Aminocapronsäure, eingesetzt werden.

Bevorzugte (cyclo)aliphatische Aminocarbonsäuren sind $\epsilon$-Aminocapronsäure bzw. Caprolactam, $\omega$-Aminoundecansäure, $\omega$-Aminododecansäure bzw. Laurinlactam, 4-Aminocyclohexyl-carbonsäure; bevorzugte aromatische Aminocarbonsäuren sind 4-Aminobenzoesäure oder 6-Amino-2-naphthoesäure.

Besonders bevorzugt sind ε-Aminocapronsäure bzw. Caprolactam, 4-Aminobenzoesäure und 6-Amino-2-naphthoesäure,

Bevorzugte Aminophenole sind z.B.:

3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4'-Amino-1-hydroxybiphenyl, besonders bevorzugt sind 4-Aminophenol und 3-Aminophenol, sowie 4'-Amino-1-hydroxy-biphenyl.

Bevorzugte Oligomere der Formel (II) sind solche, die durchschnittlich 3 bis 25, besonders bevorzugt 4 bis 20, insbesondere 4 bis 15 aromatische Teilstrukturen enthalten, wobei eine aromatische Teilstruktur wie unter Formel (I) definiert ist.

Die Herstellung der obengenannten Verbindungen der Formel (II) erfolgt nach bekannten Schmelz- und Umesterungsverfahren, die auch zur Herstellung von thermotropen LC-Polymeren herangezogen werden (Direktveresterungsverfahren [EP-A 00 88 546], Acetatverfahren [EP-A 01 02 719, 134 204], Schmelzumesterung von Carbonsäurephenylestern mit Diphenolen (Diphenylesterverfahren) [EP-A 072 540, 070 539, 024 499, 45 499, DE-OS 20 25 971, EP 070 539 und EP 132 637]).

Die erfindungsgemäßen Verbindungen der Formel (II) werden besonders bevorzugt nach dem Acetat- und/oder nach dem Diphenylesterverfahren hergestellt. Es sind oligomere Gemische mit mittleren Molekulargewichten ($\overline{M}n$) ≦4000, vorzugsweise ≦2500, welche sowohl ihre genannten Struktureinheiten wie auch ihr Molekulargewicht in statistischer Verteilung besitzen können und flüssigkristalliner Eigenschaften aufweisen. Sie werden als LC-Additiv zur Verbesserung des Fließverhaltens und Erhöhung der Steifigkeit der thermoplastischen, aromatischen Polycarbonate, der thermoplastischen, aromatischen Polyestercarbonate und der thermoplastischen, aromatischen Polyester eingesetzt.

Die Wirkung der Verbindungen der Formel (II) ist insoweit überraschend, da aus der JA 51 071 346 bekannt ist, daß aromatische Ester der Struktur

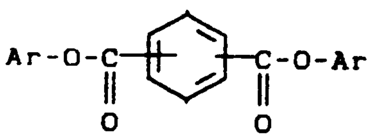

worin

Ar ein aromatischer Rest ist, der gegebenenfalls durch Halogen, $C_1$-$C_{10}$-Alkyl oder Aralkyl substiutiert ist, als Weichmacher für aroamtische Polycarbonate dienen, und zwar in Mengen von 0,01 bis 10 Gew.-%.

Der Zusatz von flüssig-kristallinen Polymeren zu Thermoplasten ist bekannt (siehe beispielsweise EP-OS 0 030 417). Ein Nachteil ist jedoch im allgemeinen die begrenzte Verträglichkeit der Thermoplasten mit den flüssig-kristallinen Polymeren, wobei vor allem die Transparenz der Thermoplasten beeinträchtigt oder gar aufgehoben wird.

Unschmelzbare, whiskerartige Poly-(p-oxybenzoat)-kristalle werden in der US-Patentschrift 4 673 724 als Verstärkungskomponente beschrieben. Diese sind wegen ihrer sehr hohen Schmelz- bzw. Erweichungspunkte jedoch sehr schwer herstellbar und mit anderen Polymeren besonders unverträglich.

Eine Verbesserung der Verträglichkeit zwischen flüssigkristalliner Phase und thermoplastischer Matrix wird in der EP 0 071 968 für teilkristalline Polymere wie Polyalkylenterephthalat beschrieben, wobei die bessere Verträglichkeit der Phasen dadurch erreicht wird, daß als flüssig-kristalline Komponenten nur Oligomere auf Basis von Terephthalsäure, 2,6-Naphthalindicarbonsäure und Diphenolen wie 3,3',5,5'-Tetramethyl-4,4'-dihydroxydiphenyl und Trimethylhydrochinon mit Molekulargewichten von 2000-10 000 eingesetzt werden. Entsprechend den niedrigen Molekulargewichten der flüssig-kristallinen Komponente sind die erzielten Verstärkungseffekte nur mäßig. So wird zwar der E-Modul von Polyethylenterephthalat-Fasern erhöht, die Zugfestigkeit aber erniedrig.

In situ erzeugte Mischungen aus flüssig-kristallinen Polymeren und amorphen Thermoplasten sind ebenfalls bekannt. (Siehe beispielsweise G. Kiss, Polymer Engeneering & Science, 27, Seiten 410-423 (1987). Derartige Mischungen haben jedoch den Nachteil, daß die erreichbaren Verstärkungseffekte in starkem Maß von den Mischungsbedingungen abhängen und die Reproduzierbarkeit der Verarbeitungsbedingungen oft problematisch einzuhalten ist.

Hinzu kommt, daß bei der Herstellung derartiger Composites die Mischungspartner sehr unterschiedliche Schmelzviskositäten unter Verarbeitungsbedingungen besitzen, so daß zur Herstellung von solchen Composites nur eine beschränkte Zahl von geeigneten Polymeren bereitsteht.

Als Verarbeitungshilfsmittel für konventionelle Thermoplaste wie aromatische Polyester oder thermoplastisch schwer verarbeitbare, flüssigkristalline Polymere werden chemisch reaktive, flüssig-kristalline, aromatische Ester beschrieben, die durch Umesterung bei höherer Temperatur in die Polymerkette einkondensieren. (Siehe US-Patent 4 650 836). Der Einbau der aromatischen, flüssig-kristallinen Ester in die Polymerkette führt jedoch zu einer chemischen Veränderung der Thermoplasten. Dies hat den Nachteil, daß in Abhängigkeit der Verarbeitungsbedingungen unterschiedliche Einbauverhältnisse und damit schlecht reproduzierbare Eigenschaften resultieren.

Aus der EP-OS 0 256 470 (Le A 24 738-EP) sind flüssigkristalline Verbindungen als Kettenverlängerer zur Herstellung von Polyurethanen beschrieben.

Die Mengen an Verbindungen der Formel (II) zur Modifizierung der thermoplastischen, aromatischen Polycarbonate, der thermoplastischen, aromatischen Polyestercarbonate und der thermoplastischen, aromatischen Polyester beträgt 0,1 Gew.-% bei 30 Gew.-%, vorzugsweise 0,5 Gew.-% bis 25 Gew.-% und insbesondere 1 Gew.-% bis 15 Gew.-%, bezogen jeweils auf Gesamtgewicht aus Verbindungen der Formel (II), und thermoplastischem Polycarbonat, thermoplastischem Polyestercarbonat und thermoplastischem Polyester.

Gegenstand der vorliegenden Erfindung ist somit auch die Verwendung der Verbindungen der Formel (II) zur Modifizierung von thermoplastischen, aromatischen Polycarbonaten und/oder thermoplastischen, aromatischen Polyestercarbonaten und/oder thermoplastischen, aromatischen Polyester.

Thermoplastische aromatische Polycarbonate im Sinne der vorliegenden Erfindung sind die durch Umsetzung von Diphenolen, insbesondere von Dihydroxydiarylalkanen, mit Phosgen oder Diestern der Kohlensäure erhältlichen Polykondensate, wobei außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Als Verzweiger beispielsweise Trisphenole oder Tetraphenole. Als Kettenabbrecher dienen beispielsweise Monophenole.

Die Polycarbonate haben mittlere Gewichtsmittelmolekulargewichte $\overline{M}w$ zwischen 10 000 und 300 000, vorzugsweise zwischen 150 000 und 250 000 einseitig und 20 000 bis 40 000 andererseits, ermittelt durch Gelpermeationschromatographie oder durch Messungen der rel. Viskosität in $CH_2Cl_2$ bsi 25 ° C und einer Konzentration von 0,5 g/pro 100 ml.

Geeignete Diphenole sind z.B. Hydrochinon, Resorcin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$ -Bis-(hydroxyphenyl)-diisopropylbenzol sowie die entsprechenden kernalkylierten bzw. kernhalogenierten Verbindungen.

Bevorzugt sind Polycarbonate auf Basis Bis-(4-hydroxyphenyl)-propan-.2,2 (Bisphenol A), bis-(4-hydroxy-3,5-dichlor-phenyl)-propan-2,2 (Tetrachlorbisphenol A), Bis-(4-hdyroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie $\alpha,\alpha'$-Bis-(4-hydroxyphenyl)-p-diisopropylbenzol.Weitere geeignete Diphenole sowie Herstellung der Polycarbonate sind beispielsweise in den US-Patenten 3 028 365, 3 062 781, 3 879 347 und 4 982 014 (Le A 26 344) beschrieben.

Verzweigte Polycarbonte sind beispielsweise im US-Patent 4 185 009 bzw. im deutschen Patent 2 500 092 beschrieben.

Thermoplastische, aromatische Polyester im Sinne vorliegender Erfindung sind solche auf Basis von Diphenolen, aromatischen Dicarbonsäuredichloriden, Kettenabbrechern und gegebenenfalls Verzweigungsmitteln.

Als Diphenole dienen die für die Polycarbonatherstellung vorstehend genannten Verbindungen.

Als Kettenabbrecher dienen Monophenole, als Verzweiger dienen Trisphenole und Tetraphenole.

Darüberhinaus können als Verzweigungsmittel hier bevorzugt auch aromatische Tricarbonsäuretrichloride oder aromatische Tetracarbonsäuretetrachloride oder Säurechloride von noch höherwertigeren aromatischen Carbonsäuren eingesetzt werden.

Sie werden in Mengen von 0,01 bis 1 Mol-%, bezogen auf eingesetzte aromatische Dicarbonsäuredichloride, eingesetzt, während bei Einsatz von phenolischen Verzweigern deren Menge von 0,01 bis 1 Mol-% sich auf eingesetzte Diphenole zur Herstellung des aromatischen Polyesters bezieht.

Verzweigungsmittel zur Herstellung aromatischer Polyester sind beispielsweise in der DE-OS 2 940 024, Seiten 9/10 (Le A 19 932) beschrieben.

Geeignete aromatische Dicarbonsäuredichloride sind:
Terephthalsäuredichlorid,
Isophthalsäuredichlorid,

o-Phthalsäuredichlorid,
Diphenyl-dicarbonsäure-dichlorid,
Diphenylether-dicarbonsäure-dichlorid,
Naphthalindicarbonsäure-dichlorid und deren Gemische.

Bevorzugte Gemische sind solche von Terephthalsäuredichloriden mit Isophthalsäuredichloriden im Verhältnis 20:1 bis 1:20, insbesondere von 7:3 bis 3:7.

Die Herstellung der aromatischen Polyester aus Säurechloriden, Diphenolen, Kettenabbrechern und gegebenenfalls Verzweigern erfolgt vorzugsweise nach dem Verfahren der Phasengrenzflächenpolykondensation in bekannter Weise. (Siehe dazu beispielsweise wiederum die DE-OS 2 940 024).

Thermoplastische aromatische Polyestercarbonate im Sinne vorliegender Erfindung sind solche erhältlich in bekannter Weise aus Diphenolen, Phosgen, aromatischen Dicarbonsäuredichloriden, Kettenabbrechern und gegebenenfalls Verzweigern.

Polyestercarbonate sowie ihre Herstellung sind bekannt. (Siehe beispielsweise E-OS 0 036 080, US-PS 3 169 121 und DE-OS 2 714 544).

Geeignete Diphenole sind die für die Polycarbonatherstellung bereits genannten.

Geeignete aromatische Dicarbonsäuredichloride sind die für aromatische Polyesterherstellung bereits genannten, wobei wiederum Gemische von Terephthalsäuredichloriden mit Isophthalsäuredichloriden in den bereits erwähnten Mischungsverhältnissen besonders geeignet sind.

Geeignete Kettenabbrecher sind Monophenole, wie sie auch für die Polycarbonat- und Polyester-Herstellung geeignet sind.

Geeignete Verzweiger sind die vorstehend für die aromatischen Polyester genannten mehr als zweiwertigen Phenole und mehr als zweiwertigen aromatischen Carbonsäurechloride.

Die aromatischen Polyestercarbonate im Sinne der vorliegenden Erfindung haben bis etwa 80 Mol-%, vorzugsweise bis etwa 50 Mol-% Carbonatgruppen, bezogen auf die Molsumme an Carbonatgruppen und aromatischen Carbonsäureestergruppen.

Sowohl der Ester- als auch der Carbonatanteil der erfindungsgemäßen aromatischen Polyestercarbonate kann in Form von Blöcken oder statistisch verteilt im Polykondensat vorliegen.

Die relative Lösungsviskosität ($\eta$rel) der aromatischen Polyester und Polyestercarbonate liegt im Bereich 1,18 bis 1,4 vorzugsweise 1,22 bis 1,3 (gemessen an Lösungen von 0,5 g Polyestercarbonat in 100 ml $CH_2Cl_2$-Lösung bei 25° C).

Die Einarbeitung der Verbindungen der Formel (II) erfolgt vorzugsweise in die Lösung der Polycarbonate bzw. Polyestercarbonate bzw. Polyester, wie sie bei der Herstellung der Polycarbonate bzw. Polyestercarbonate bzw.

Polyester nach dem Phasengrenzflächenverfahren anfallen oder auf einfache Weise aus den Granulaten dieser Kunststoffe mit üblichen Lösungsmitteln hergestellt werden können. Die Lösungen können dann in bekannter Weise beispielsweise via Eindampfextruder aufgearbeitet werden und die modifizierten Thermoplasten in bekannter Weise beispielsweise als Granulat isoliert werden. Die Lösungen können auch direkt zu Folien vergossen werden.

Die Einarbeitung der Verbindungen der Formel (II) kann auch über die Schmelze der Polycarbonate bzw. der Polyestercarbonate bzw. der Polyester erfolgen, beispielsweise mittels Extruder, vorzugsweise mittels Doppelwellenextruder, wobei wiederum die modifizierten Thermoplasten in bekannter Weise beispielsweise als Granulat isoliert werden können.

Gegenstand ist somit außerdem ein Verfahren zur Einarbeitung der Verbindungen der Formel (II) in thermoplastische, aromatische Polycarbonate und/oder thermoplastische, aromatische Polyestercarbonate und/oder thermoplastische, aromatische Polyester, das dadurch gekennzeichnet ist, daß man die Verbindungen der Formel (II) in Mengen von 0,1 Gew.-% bis 30 Gew.-%, vorzugsweise von 0,5 Gew.-% bis 25 Gew.-% und insbesondere von 1 Gew.-% bis 15 Gew.-%, Lösungen von thermoplastischen, aromatischen Polycarbonaten und/oder thermoplastischen, aromatischen Polyestercarboanten und/oder thermoplastischen, aromatischen Polyestern in für diese Thermoplasten üblichen Lösungsmitteln zudosiert und diese Lösungen dann in bekannter Weise aufarbeitet, oder daß man die Verbindungen der Formel (II) in den oben angegebenen Mengen über die Schmelze der oben genannten Polycarbonate und/oder Polyestercarbonate und/oder Polyester in bekannter Weise einarbeitet und die modifizierten Thermoplasten in bekannter Weise isoliert.

Gegenstand der vorliegenden Erfindung sind außerdem thermoplastische, aromatische Polycarbonate und/oder thermoplastische aromatische Polyestercarbonate und/oder thermoplastische, aromatische Polyester, die dadurch gekennzeichnet sind, daß sie Verbindungen der Formel (II) in Mengen von 0,1 Gew.-% bis 30 Gew.-%, vorzugsweise von 0,5 Gew.-% bis 25 Gew.-% und insbesondere von 1 Gew.-% bis 15 Gew.-%, bevorzugt auf Gesamtgewicht aus Thermoplast und Verbindung der Formel (II), enthalten.

Die durch den erfindungsgemäßen Zusatz der Verbindungen der Formel (II) modifizierten Polycarbonate, Polyestercarbonate und Polyester haben außer den bereits genannten vorteilhaften Eigenschaften außerdem ein hohes Maß an Transparenz, insbesondere in den Fällen, in denen Verbindungen der Formel (II) mit 3 bis 8 aromatischen Teilstrukturen eingesetzt werden, wobei wiederum -Ar-als eine aromatische Teilstruktur zählt.

Die erfindungsgemäß durch den Zusatz der Verbindungen der Formel (II) modifizierten Polycarbonate, Polyestercarbonate und Polyester können noch die üblichen für die genannten Thermoplasten geeigneten Stabilisatoren in den für diese Thermoplasten üblichen Mengen enthalten.

Die erfindungsgemäß durch den Zusatz der Verbindungen der Formel (II) modifizierten Polycarbonate, Polyestercarbonate bzw. Polyester eignen sich zur Herstellung von Formkörpern durch Spritzguß- und Extrusionsverarbeitung, vorzugsweise für Anwendungen in denen es auf hohe Steifigkeit, hohe Dimensionsstabilität und gute Oberflächenbeschaffenheit ankommt.

Eine beonders bevorzugte Anwendung der erfindungsgemäßen transparenten Formmassen ist die Herstellung von Formkörpern zur Aufnahme akustischer und/oder optischer Informationen (z.B. Compact-Discs).

Die nachfolgenden Beispiele erläutern die Erfindung, ohne sie darauf einzuschränken.

Die Ermittlung des flüssigkristallinen Verhaltens erfolgte in einem Heiztischmikroskop unter gekreuzten Polarisatoren.

## Beispiele

I. Herstellung flüssigkristallinen Polymeradditive gemäß Formel (II):

### Beispiel 1

(erfindungsgemäße, statistisch aufgebaute LC-Ester(amide)

In einem Reaktionsgefäß mit Rührer, Kolonne und Destillierbrücke werden
276,0 g p-Hydroxybenzoesäure
220,0 g Hydrochinon
488,0 g Benzoesäure
0,8 g Magnesium und
624,2 g Acetanhydrid
eingewogen.

Bei einer Innentemperatur von 160 °C begann die Abspaltung der Essigsäure. Mit nachlassender Destillationsgeschwindigkeit wurde die Reaktionstemperatur langsam auf 250 °C erhöht.

Nach Beendigung der Destillation wurde der Druck im Verlauf von 30 Minuten bis auf 1 mbar gesenkt. Während der Vakuumphase wurden restliche Mengen an Essigsäure im Verlauf von 2 Stunden abgespalten.

Das Produkt wurde in eine Weißblechdose abgefüllt und nach dem Erkalten zerkleinert.

Ausbeute: 876 g.

Im Bereich zwischen 190 und 350 °C wurde mittels Polarisationsmikroskopie eine flüssigkristalline Phase festgestellt.

### Beispiel 2

Analog zur Vorschrift in Beispiel 1 werden
193,2 g p-Hydroxybenzoesäure
260,4 g 4,4'-Dihydroxydiphenyl
341,6 g Benzoesäure
0,07 g Magnesium und
437,0 g Acetanhydrid
eingewogen und umgesetzt.

Ausbeute: 698 g.

Im Bereich von 180 und 320 °C wurde mittels Polarisationsmikroskopie eine flüssigkristalline Phase festgestellt.

### Beispiel 3

Analog zur Vorschrift in Beispiel 1 werden

207,0 g p-Hydroxybenzoesäure
165,0 g Hydrochinon
166,0 g Isophthalsäure
122,0 g Benzoesäure
0,06 g Magnesium und
468,0 g Acetanhydrid
eingewogen und umgesetzt.
Ausbeute: 560 g.

Im Bereich von 220 und 320 °C wurde mittels Polarisationsmikroskopie eine flüssigkristalline Phase festgestellt.

Beispiel 4

Analog zur Vorschrift in Beispiel 1 werden
228,0 g p-Methoxybenzoesäure
165,0 g Hydrochinon
204,0 g p-Methylbenzoesäure
312,0 g Acetanhydrid und
0,05 g Magnesium
eingewogen und zur Umsetzung gebracht.
Ausbeute: 460 g

Beispiel 5

220,0 g Hydrochinon
166,0 g Terephthalsäure
244,0 g Benzoesäure
416,0 g Acetanhydrid
0,06 g Magnesium-Pulver
Ausbeute: 540 g
LC-Bereich: 180 - >360 °C;

Beispiel 6

207,0 g p-Hydroxybenzoesäure
165,0 g Hydrochinon
124,5 g Terephthalsäure
183,0 g Benzoesäure
468,2 g Acetanhydrid
0,06 g Magnesium-Pulver
Ausbeute: 550 g
LC-Bereich: 170 - >350 °C;

Beispiel 7

110,4 g p-Hydroxybenzoesäure
297,6 g Dihydroxydiphenyl
132,8 g Terephthalsäure
97,6 g Benzoesäure
416,2 g Acetanhydrid
0,06 g Magnesium-Pulver
Ausbeute: 590 g: Reaktionsendtemperatur 290 °C
LC-Bereich 260 - 350 °C

Beispiel 8

173,9 g p-Hydroxybenzoesäure
138,6 g Hydrochinon

119,5 g Isophthalsäure
59,8 g Terephthalsäure
43,9 g Benzoesäure
0,06 g Magnesium-Pulver
Ausbeute: 450 g, Reaktionsendtemperatur 260 °C,
LC-Bereich 230 - >350 °C;

Beispiel 9

220,8 g p-Hydroxybenzoesäure
176,0 g Hydrochinon
249,0 g Isophthalsäure
24,4 g Benzoesäure
499,4 g Acetanhydrid
0,06 g Magnesium-Pulver
Ausbeute: 550 g, Reaktionsendtemperatur 300 °C,
LC-Bereich 250 - >350 °C.

II. Herstellung der thermoplastischen Formmassen

Die Herstellung der thermoplastischen Formmassen erfolgt auf zwei Wegen:

a) Zumischen der flüssigkristallinen Verbindung zur Polymerlösung vor der Aufarbeitung und

b) Compoundierung der amorphen, aromatischen Polyester, Polyestercarbonate und Polycarbonate mit den flüssigkristallinen Verbindungen in der Schmelze.

Im folgenden sind die in den Beispielen und Vergleichsbeispielen verwendeten Materialien beschrieben.

Die angegebenen relativen Lösungsviskositäten wurden in Methylenchlorid bei einer Polymerkonzentration von 5 g/l bei 25 °C gemessen.

1. Polycarbonat (PC) aus Bisphenol A mit einer rel. Lösungsviskosität $\eta_{rel}$ = 1,280.

2. Polyestercarbonat (APEC) aus Beispiel A mit 80 Gew.-% Esteranteil äquimolaren Mengen Iso und Terephthalsäure, hergestellt gemäß EP 0 036 080 mit einer rel. Lösungsviskosität $\eta_{rel}$ 1,294.

3. Polyester (APE) aus Bisphenol A und äquimolaren Mengen Iso- und Terephthalsäure, hergestellt gemäß DOS 2 940 024 mit einer rel. Lösungsviskosität $\eta_{rel}$ = 1,267.

Die Prüfung der Schlagzähigkeit $a_n$ und Kerbschlagzähigkeit $a_k$ erfolgte an 80 x 10 x 4 mm-Prüfkörpern gemäß DIN 53 453 (ISO/R 179) bei 23 °C jeweils an 10 Prüfkörpern.

Die Bestimmung der Biegefestigkeit wurde an 80 x 10 x 4 mm Prüfkörpern gemäß DIN 53 452 (ISO/R 178) durchgeführt. Der Biege-E-Modul wurde gemäß DIN 53 547 ermittelt.

Die Bestimmung der Zugfestigkeit erfolgte am Schulterstab (0,7-fach) gemäß DIN 53 455. Der Zug-E-Modul wurde gemäß der DIN 53 457 ermittelt. Das Fließverhalten in der Schmelze wurde durch die Messung der Schmelzviskosität beurteilt. Die Düse hatte, wenn nichts anderes angegeben, ein Längen- zu Dickenverhältnis (L/D) von 30:1.

Die Zusammensetzung und die Eigenschaften der thermoplastischen Formmassen sind in Tabelle 1 zusammengefaßt.

Tabelle 1 Thermoplastische Formmassen aus Basis Polycarbonat Makrolon 2800

| Zusammensetzung PC 2800 (%) | LC-Verb. Beisp. | (%) | Herst.-Methode | Schmelzevisk. $T=330^0 C$; $\gamma=1000 s^{-1}$ | $T_{Verarb.}$ [°C] | $a_n$ ($kJ/m^2$) | $\sigma_R$ (MPa) | $\epsilon_R$ (%) | Z-E-M (MPa) | $\sigma_B$ (MPa) | $\epsilon_B$ (MPa) | B-E-M (MPa) |
|---|---|---|---|---|---|---|---|---|---|---|---|---|
| 100 | - | 0 | a | 320 | 300 | o.B. | 65 | 80 | 2400 | 95 | 7,4 | 2200 |
| 100 | - | 0 | b | 300 | 320 | o.B. | 64 | 80 | 2570 | 98 | 7,2 | 2300 |
| | 1 | 1 | b | 220 | 280 | o.B. | 68 | 81 | 2600 | 102 | 7,2 | 2310 |
| | 1 | 5 | b | 160 | 280 | 8xo.B. | 72 | 70 | 2850 | 115 | 6,9 | 2530 |
| | 1 | 5 | a | 155 | 260 | 2x145 | 70 | | 2800 | 120 | 6,7 | 2580 |
| | 3 | 2 | b | 144 | 280 | o.B. | 71 | 80 | 2770 | 105 | 6,8 | 2420 |
| | 3 | 5 | b | 100 | 280 | 7xo.B. 3x120 | 70 | 72 | 2830 | 115 | 6,6 | 2500 |
| | 4 | 5 | b | 170 | 280 | 8xo.B. 2x | 68 | 65 | 2750 | 109 | 6,5 | 2510 |
| | 6 | 5 | b | 160 | 280 | 9xo.B. 1x130 | 72 | 65 | 2820 | 110 | 6,8 | 2530 |
| | 8 | 5 | b | 220 | 280 | 5xo.B. 5x95 | 60 | 40 | 2950 | 110 | 5,3 | 2540 |

$T_{Verarb.}$ : Verarbeitungstemperatur
$a_n$ : Schlagzähigkeit
$\sigma_R$ : Reißfestigkeit
$\epsilon_R$ : Reißdehnung
Z-E-M : Zug-E-Modul
$\sigma_B$ : Biegefestigkeit
$\epsilon_B$ : Randfaserdehnung
B-E-M : Biege-E-Modul
o.B. : ohne Bruch

## Patentansprüche

**1.** Leichtfließende thermoplastische, aromatische Polycarbonate und/oder thermoplastische, aromatische Polyestercarbonate und/oder thermoplastische, aromatische Polyester, dadurch gekennzeichnet, daß

sie flüssigkristalline Ester- und/oder Esteramid-Oligomerer der Formel (II) mit statistischer Verteilung der Struktureinheiten in Mengen von 0,1 Gew.% bis 30 Gew.%, bezogen auf Gesamtgewicht aus thermoplastischem Polycarbonat und/oder Polyestercarbonat und/oder Polyester und Oligomer der Formel (II), enthalten,

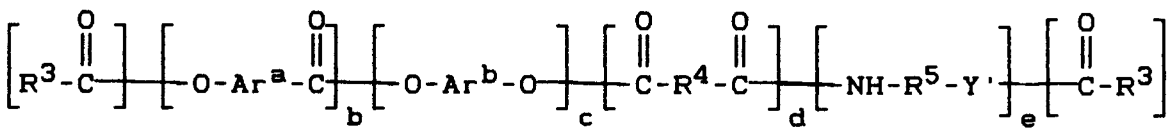

Formel (II)

worin

| | |
|---|---|
| $R^3$ | einen Alkylrest, vorzugsweise Methylrest, oder einen gegebenenfalls substituierten, vorzugsweise mono- oder disubstituierten Arylrest, vorzugsweise einen Phenylrest, darstellt, 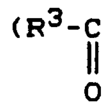 ist jeweils eine Endgruppe) |
| $Ar^a$ | ein bivalenter, gegebenenfalls substituierter (Substituenten wie in $R^3$), ein- oder mehrkerniger aromatischer Rest mit 6-24 C-Atomen ist, wobei der mehrkernige Rest direkt verknüpft oder auch annelliert sein kann, |
| $Ar^b$ | einen bivalenten, gegebenenfalls substituierten, ein- oder mehrkernigen aromatischen Rest mit 6-30 C-Atomen darstellt, wobei der mehrkernige Rest unterschiedlich verknüpft sein kann, |
| $R^4$ bzw. $R^5$ | für einen Alkylrest mit 0-40 ($R^4$) bzw. 3-40 ($R^5$) C-Atomen stehen oder beide auch für einen cycloaliphatischen Rest mit 5-15 C-Atomen stehen können oder bevorzugt die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch annelliert verknüpft sein kann, |
| Y' | für -O-, 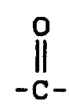 oder -NH- steht, und im Falle der Verknüpfung mit einer Endgruppe 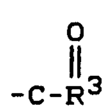 für die Reste -O- oder -NH- steht, und |
| b = | Null bis 10, vorzugsweise bis 8, insbesondere bis 4, |
| c = | 1 bis 9, vorzugsweise bis 7, insbesondere 1 bis 4, |
| d = | Null bis 9, vorzugsweise bis 7, insbesondere bis 3, und |
| e = | Null bis 3, vorzugsweise bis 2 ist, |

und worin die Endgruppen durch Strukturelemente des Typs

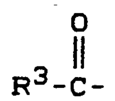

gebildet werden,
und wobei das mittlere Molekulargewicht $\overline{M}$n der Verbindungen der Formel (II) nicht größer als 4000, bevorzugt nicht größer als 2500 ist.

**2.** Leichtfließende thermoplastische, aromatische Polycarbonate nach Anspruch 1, dadurch gekennzeichnet, daß als Bausteine für die flüssigkristallinen Verbindungen der Formel (II) bevorzugt 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure, Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Methylhydrochinon, Phenylhydrochinon, 2,2'-Dimethyl-4,4'-dihydroxydiphenyl, 3,3',5,5'-Tetramethyl-4,4'-dihydroxydiphenyl, 1,2-(2-Chlor-4-hydroxyphenoxy)-ethan, 4-Methoxy-2,6-dihydroxynaphthalin, Resorcin, 3,4'-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-dihydroxynaphthalin und 4-Methoxy-2,7-dihydroxynaphthalin, 1,4-Naphthalindicarbonsäure, 1,5-Naphthalindicarbonsäure, 2,6-Naphthalindicarbonsäure, Biphenyl-4,4'-dicarbonsäure, Biphenyl-3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 2,6- oder 2,7-Naphthalindicarbonsäure, Biphenyl-3,4'-dicarbonsäure, 4-Methylisophthalsäure, 5-Methylisophthalsäure, Diphenylether-4,4'-dichlor-3,3'-dicarbonsäure, Iso- und Terephthalsäure, $\epsilon$-Aminocapronsäure bzw. Caprolactam, $\omega$-Aminoundecansäure, $\omega$-Aminododecansäure bzw. Laurinlactam, 4-Aminocyclohexyl-carbonsäure, 4-Aminobenzoesäure, 6-Amino-2-naphthoesäure, 3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4'-Amino-1-hydroxybiphenyl, Oxalsäure, Bernsteinsäure, Adipinsäure, Korksäure, Azelainsäure, Trimethyladipinsäure, Sebacinsäure, Dodecandisäure, Dimerfettsäuren, 1,4-Cyclohexandicarbonsäure, Benzoesäure, 4-Methylbenzoesäure, 4-Methoxybenzoesäure und 4-Biphenylcarbonsäure,

und besonders bevorzugt Hydrochinon, 4,4'-Dihydroxybiphenyl, 4-Aminophenol, 3-Aminophenol, 4'-Amino-1-hydroxybiphenyl, 4-Hydroxybenzoesäure, 3-Hydroxybenzoesäure, 6-Hydroxy-2-naphthoesäure, Isophthalsäure, Terephthalsäure, Oxalsäure, Adipinsäure, Sebazinsäure und Dimerfettsäuren, 4-Aminobenzoesäure und 6-Amino-2-naphthoesäure, $\epsilon$-Aminocapronsäure bzw. Caprolactam, Benzoesäure, 4-Methylbenzoesäure und 4-Biphenylcarbonsäure verwendet werden, und wobei die Additive der Formel (II) durchschnittlich bevorzugt 3-25 und besonders bevorzugt 4-20 aromatische Teilstrukturen enthalten.

**3.** Verfahren zur Einarbeitung der Verbindungen der Formel (II) in thermoplastische, aromatische Polycarbonate und/oder thermoplastische, aromatische Polyestercarbonate und/oder thermoplastische, aromatische Polyester, das dadurch gekennzeichnet ist, daß man die Verbindungen der Formel (II) in Mengen von 0,1 Gew.-% bis 30 Gew.-%, Lösungen von thermoplastischen, aromatischen Polycarbonaten und/oder thermoplastischen, aromatischen Polyestercarboanten und/oder thermoplastischen, aromatischen Polyestern in für diese Thermoplasten üblichen Lösungsmitteln zudosiert und diese Lösungen dann in bekannter Weise aufarbeitet, oder daß man die Verbindungen der Formel (II) in den oben angegebenen Mengen über die Schmelze der oben genannten Polycarbonate und/oder Polyestercarbonate und/oder Polyester in bekannter Weise einarbetiet und die modifizierten Thermoplasten in bekannter Weise isoliert.

**4.** Thermoplastische, aromatische Polycarbonate und/oder thermoplastische, aromatische Polyestercarboante und/oder thermoplastische, aromatische Polyester gemäß Anspruch 1, dadurch gekennzeichnet, daß sie Verbindungen der Formel (II) in Mengen von 0,5 Gew.-% beis 25 Gew.-% enthalten.

**5.** Polycarboate und/oder Polyestercarbonate und/oder Polyester gemäß Anspruch 4, dadurch gekennzeichnet, daß sie Verbindungen der Formel (II) in Mengen von 1 Gew.-% bis 15 Gew.-% enthalten.